**Europäisches Patentamt**

**European Patent Office**

**Office européen des brevets**

(19)

(11) Veröffentlichungsnummer : **0 306 486 B1**

## EUROPÄISCHE PATENTSCHRIFT

(12)

(45) Veröffentlichungstag der Patentschrift :
**02.01.92 Patentblatt 92/01**

(51) Int. Cl.$^5$ : **H02K 3/52,** H02K 3/32

(21) Anmeldenummer : **87902419.8**

(22) Anmeldetag : **06.05.87**

(86) Internationale Anmeldenummer :
**PCT/DE87/00198**

(87) Internationale Veröffentlichungsnummer :
**WO 87/07452 03.12.87 Gazette 87/27**

(54) **STATOR FÜR EINE ELEKTRISCHE MASCHINE.**

(30) Priorität : **21.05.86 DE 3617017**

(43) Veröffentlichungstag der Anmeldung :
**15.03.89 Patentblatt 89/11**

(45) Bekanntmachung des Hinweises auf die
Patenterteilung :
**02.01.92 Patentblatt 92/01**

(84) Benannte Vertragsstaaten :
**DE FR GB IT**

(56) Entgegenhaltungen :
**EP-A- 0 038 495**
**DE-B- 1 231 796**
**GB-A- 1 602 554**
**Patent Abstracts of Japan, Band 8, Nr. 239,**
**(E-276)(1676) 2. November 1984, siehe Zusam-**
**menfassung & JP-A-59117437**

(73) Patentinhaber : **ROBERT BOSCH GMBH**
**Postfach 50**
**W-7000 Stuttgart 1 (DE)**

(72) Erfinder : **KLEEMANN, Dittmar**
**Im grossen Hof 7**
**W-3403 Friedland 1 (DE)**

**EP 0 306 486 B1**

## Beschreibung

### Stand der Technik

Die Erfindung geht von einem Stator für eine elektrische Maschine nach der Gattung des Hauptanspruchs aus. Bei einem derartigen bekannten vierpoligen Stator werden die vier Einzelwicklungen jeweils als vier Haupt- und vier Nebenschluß-Einzelwicklungen für sich gewickelt. Dann werden jeweils eine Haupt- und eine Nebenschluß-Einzelwicklung zu einer kombinierten Einzelwicklung zusammengesetzt. Die kombinierten Einzelwicklungen werden durch Wickelbandagen - meistens in Handarbeit angelegt - für sich zusammengehalten. Es werden in nachfolgenden Arbeitsgängen die Wicklungsenden zum Verbinden der kombinierten Einzelwicklungen zur Erregerwicklung vorbereitet durch Verlegen, Isolieren, Zusammenfassen, Versehen mit Kontaktteilen für den Spannungsanschluß, ehe die kombinierten Einzelwicklungen in die dem Innendurchmesser des Polgehäuses angepaßte Form gebogen und zur Erregerwicklung in Form eines Spulenkörpers verbunden werden. Die Verbindungsstellen sind dann auch noch zu isolieren und die Erregerwicklung ist zu imprägnieren, ehe sie im Polgehäuse montiert wird. Eine derartige Erregerwicklung hat den Nachteil, daß sie nicht mit einem automatisierten Verfahren hergestellt werden kann und somit zu teuer ist vor allem für die Großmengenfertigung.

Außerdem ist aus der GB-A-16 02 554 ein Spaltpolmotor bekannt, bei dem die Erregerwicklung auf einem aus flachem, biegsamen und isolierendem Bandmaterial bestehenden Wicklungsträger aufgebracht ist. Die Erregerwicklung besteht nur aus einem einheitlichen Draht.

### Aufgabe, Lösung und Vorteile der Erfindung

Der Erfindung liegt die Aufgabe zugrunde, einen Stator der eingangs genannten Art zu schaffen, bei dem nicht nur die Hauptschlußwicklung aus nicht isoliertem Flachdraht sondern auch die Nebenschlußwicklung aus isoliertem Runddraht in einem automatisierten Verfahren hergestellt werden kann, um die Erregerwicklung in wirtschaftlicher Weise fertigen zu können.

Zur Lösung der Aufgabe sind die im Kennzeichen des Hauptanspruchs angegebenen Maßnahmen vorgesehen.

Dabei ist von Vorteil, die Einzelwicklungen der Nebenschlußwicklung und deren Kontaktteile fortlaufend auf einem gemeinsamen Wicklungsträger anzuordnen, der aus flachem, biegsamen Isoliermaterial in Bandform beispielsweise Preßspan besteht. Der Wicklungsträger ist dazu aus einem Endlosband durch Schneiden, Prägen und Falten mit Wickelkammern, Wickeldrahtstützen und Fixierstellen für die Kontaktteile versehen und derart ausgebildet, daß die Nebenschlußwicklung samt Wicklungsträger in einem automatisierten Verfahren für sich hergestellt werden kann. Erst zur Montage der Erregerwicklung im Polgehäuse werden die Haupt- und die Nebenschlußwicklung zusammengesetzt.

Durch die in den Unteransprüchen aufgeführten Maßnahmen sind vorteilhafte Weiterbildungen des im Hauptanspruch angegebenen Stators möglich. Besonders vorteilhaft ist, daß die Nebenschlußwicklung auf dem Wicklungsträger aus flachem und biegsamen isolierenden Bandmaterial durch Verbacken in ihrer Lage fixiert gehalten wird und die Kontaktteile für den Spannungsanschluß auf dem Wicklungsträger sitzen und die Wicklungsenden dort an ihnen befestigt werden können.

Darüberhinaus kann der die Nebenschlußwicklung und die Kontaktteile tragende Wicklungsträger außen oder innen die Hauptschlußwicklung umgeben und dementsprechend gewölbt an der Innenwand des Polgehäuses oder an den Pollappen der Pole anliegend im Polgehäuse angeordnet werden. Die Wickelkammern für die Nebenschlußwicklung sind dazu nach innen oder außen gefaltet.

### Zeichnung

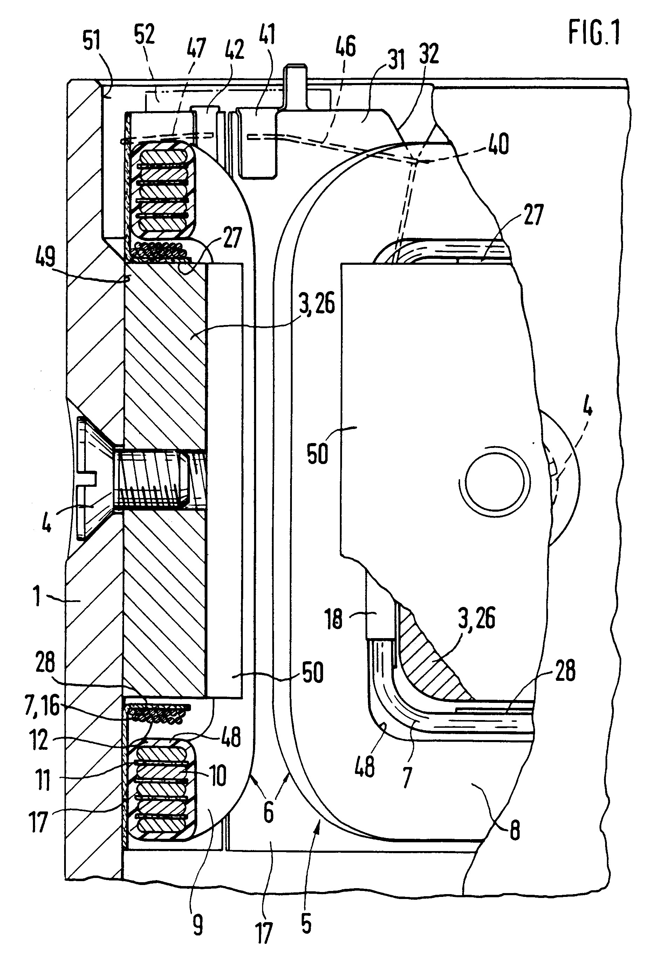

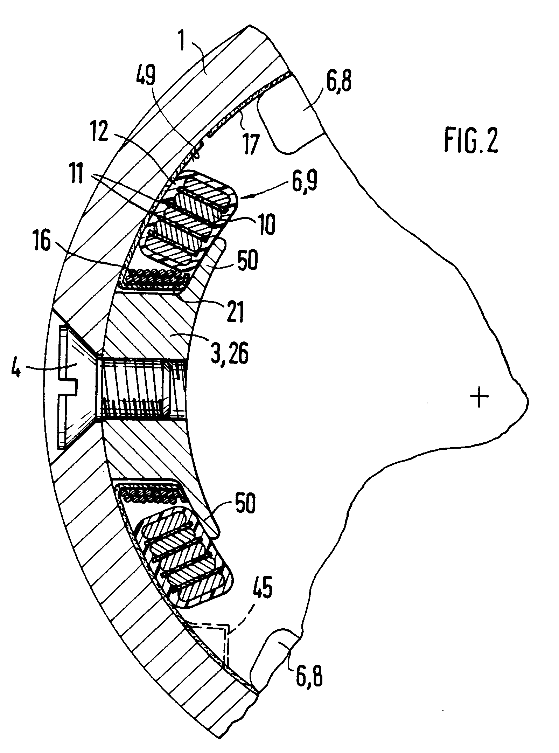

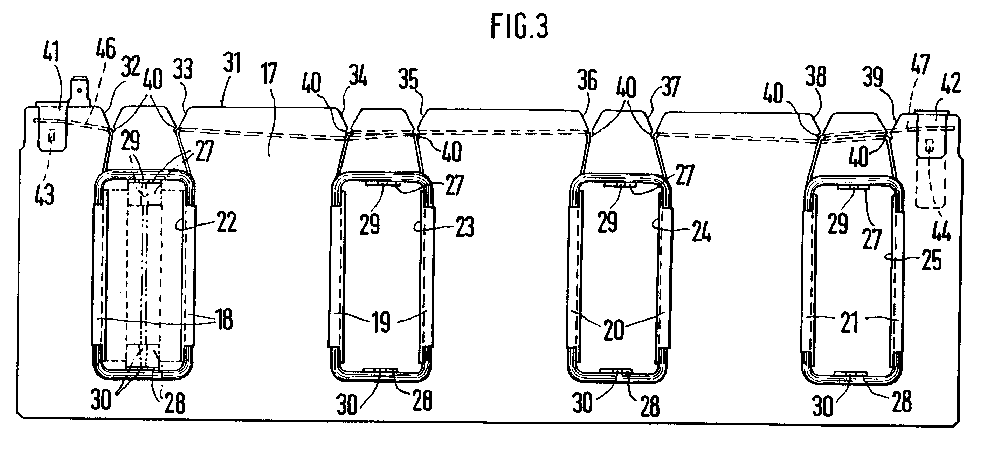

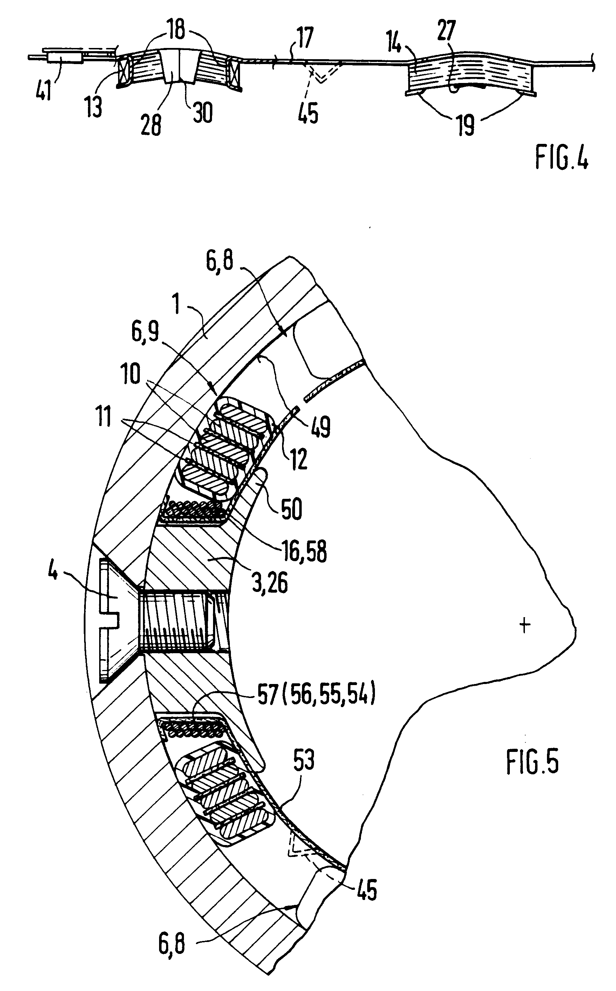

Ausführungsbeispiele der Erfindung sind in der Zeichnung dargestellt und in der nachfolgenden Beschreibung näher erläutert. Es zeigen Figur 1 ein erstes Ausführungsbeispiel eines Stators, teilweise im Längsschnitt, Figur 2 einen Teil des Stators nach Figur 1 im Querschnitt, Figur 3 einen ebenen Wicklungsträger mit Nebenschlußwicklung und Kontaktteilen in Seitenansicht, Figur 4 einen Teil des Wicklungsträgers mit gewölbten Wickelkammern in Draufsicht und Figur 5 einen Teil eines zweiten Ausführungsbeispieles des Stators im Querschnitt.

### Beschreibung der Ausführungsbeispiele

Ein Stator einer elektrischen Maschine hat ein Polgehäuse 1, in dem vier Pole zwei Polpaare 2, 3 bildend befestigt sind. Die Polpaare 2 und 3 sind mit Schrauben 4 im Polgehäuse 1 befestigt. Die Polpaare 2 und 3 tragen eine Erregerwicklung 5. Die Erregerwicklung 5 besteht aus einer Hauptschlußwicklung 6 und einer Nebenschlußwicklung 7. Die Hauptschlußwicklung 6 ist aus vier einzelnen Wicklungselementen gebildet, von denen zwei in der Zeichnung dargestellt und mit 8 und 9 bezeichnet sind. Die Wicklungselemente 8, 9 der Hauptschlußwicklung 6 sind in an sich bekannter Weise aus nicht isoliertem Bandmaterial 10 gewickelt. Die einzelnen Windungen sind dabei durch Zwischenlage beispielsweise eines beim Wickeln mitlaufend verlegten Papierstreifens 11 gegeneinander isoliert. Die Wicklungselemente 8, 9 sind in ebenfalls an sich bekannter Weise gewölbt, zu einem Spulenkorb verbunden und mit einer die gesamte Hauptschlußwicklung 6 umgebundenen Isolierung 12 umhüllt, die beispielsweise durch Umspritzen oder Tauchen gebildet ist. Lediglich die zum Spannungsanschluß dienende Enden der Hauptschlußwicklung 6 ragen aus der Isolierung 12. Zum Herstellen der Hauptschlußwicklung 6 dient ein an sich bekanntes automatisiertes Verfahren.

Die Nebenschlußwicklung 7 besteht ebenfalls aus vier Wicklungselementen 13 bis 16, die aus isoliertem Draht runden Querschnitts fortlaufend auf einen Wicklungsträger 17 gewickelt ist. Der Wicklungsträger 17 besteht aus flachem, biegsamen, wärmebeständigem und isolierendem Bandmaterial, beispielsweise aus Preßspan, welches mit einer klebefähigen Beschichtung versehen sein kann. Der Wicklungsträger 17 wird durch Endlosherstellen von dem Bandmaterial geschnitten, geprägt und gefaltet. Dabei wird für jedes Wicklungselement 13 bis 16 eine Wickelkammer 18 bis 21 gefaltet. Jede Wickelkammer 18 bis 21 grenzt an ein rechteckiges Fenster 22 bis 25 entsprechend der Form des Jochs 26 der zu den Polpaaren 2 und 3 gehörenden Pole. An den Längsseiten der Fenster 22 bis 25 ist die Wickelkammer 18 bis 21 als U-förmige Aufnahme gefaltet. An jeder Querseite der Fenster 22 bis 25 ist jeweils ein Lappen 27 oder 28 senkrecht zum Wicklungsträger 17 gefaltet. Die Lappen 27 und 28 sind mit einem sich zum freien Ende der Lappen 27 und 28 keilförmig erweiternden Schlitz 29 bzw. 30 versehen.

An einem Längsrand 31 des Wicklungsträgers 17 sind keilförmige Kerben als Stützpunkte 32 bis 39 für den Wicklungsdraht ausgeschnitten. Die Stützpunkte 32 bis 39 sind an ihrem Grund 40 kreisausschnittförmig erweitert. Die Erweiterung des Grundes 40 ist dem Durchmesser des Wicklungsdrahtes angepaßt. Die Stützpunkte 32 bis 39 sind paarweise den Wickelkammern 18 bis 21 zugeordnet, um Anfang und Ende des jeweiligen Wicklungselementes 13 bis 16 führend und stützend aufzunehmen. Nach den Enden des Wicklungsträgers 17 ist jeweils für ein Kontaktteil 41 oder 42 eine lagefixierende Verformung 43 oder 44 des Wicklungsträgers 17 ausgebildet. Sie kann beispielsweise die Form eines Loches oder einer Rastnase oder einer Vertiefung haben. Das Kontaktteil 41 ist als Plus-Kontaktschuh und das Kontaktteil 42 ist als Minus-Kontaktschuh ausgebildet.

In den Wicklungsträger 17 können noch Falten 45 geformt sein, welche sich quer über den Wicklungsträger 17 erstrecken. Sie dienen zum Ausgleich von Fertigungstoleranzen, welche vor allem in Umfangsrichtung bei Polgehäuse 1 und korbförmiger Hauptschlußwicklung 6 gegenüber dem bestand der Fenster 22 bis 21 und Wickelkammern 18 bis 21 des Wicklungsträgers 17 für die Nebenschlußwicklung 7.

Die Nebenschlußwicklung 7 wird in die Wickelkammern 18 bis 21 des Wicklungsträgers 17 fortlaufend gewickelt. Anfang und Ende jedes Wicklungselementes 13 bis 16 wird durch die zugeordneten Stützpunkte 32 bis 39 geführt. Der Anfang 46 der Nebenschlußwicklung 7 wird dann an den Plus-Kontaktschuh 41 und das Ende 47 der Nebenschlußwicklung 7 wird an den Minus-Kontaktschuh 42 geschweißt. Anschließend werden die Wicklungselemente 13 bis 16 durch Verbacken oder Verkleben in ihrer Lage in den Wickelkammern 16 bis 21 und an den Lappen 27 und 28 fixiert In den Stützpunkten 32 bis 39 wird der Wicklungsdraht versiegelt. Anschließend wird der Wicklungsträger 17 im Bereich der Wickelkammern 18 bis 21 samt Wicklungselementen 13 bis 16 entsprechend dem Innendurchmesser des Polgehäuses 1 gewölbt. Dabei werden die keilförmigen Schlitze 29 und 30 der Lappen 27 und 28 geschlossen. Die Nebenschlußwicklung 7 ist somit auf der dem Wölbungsmittelpunkt zugewandten Seite des Wicklungsträgers 17 aufgebracht und mit Kontaktteilen 41, 42 zum Spannungsanschluß versehen. Der Wicklungsträger 17 ermöglicht, auch die Nebenschlußwicklung 7 in einem automatisierten Verfahren für sich herzustellen.

Zum Montieren der Erregerwicklung 5 im Polgehäuse 1 wird der Wicklungsträger 17 um die als Spulenkorb ausgebildete Hauptschlußwicklung 6 gewölbt. Dabei ragen die Wickelkammern 18 bis 21 mit den Wicklungselementen 13 bis 16 in die Fenster 48 der Wicklungselemente 8, 9 der Hauptschlußwicklung 6, so daß die Hauptschlußwicklung 6 die Nebenschlußwicklung 7 umgibt und mit ihrem Außenumfang am gewölbten Wicklungsträger 17 anliegt. Die Erregerwicklung 6 wird dann in das Polgehäuse 1 geschoben. Die Pole der Polpaare 2, 3 werden von innerhalb des Spulenkorbes der Hauptschlußwicklung 6 durch die zugeordneten Fenster 22 bis 25 des Wicklungsträgers 17 gesteckt und mit den Schrauben 4 an die Innenwand 49 des Polgehäuses 1 geschraubt. Der Wicklungsträger 17 liegt dann mit seinem Außenumfang an der Innenwand 49 des Polgehäuses 1 an. Der freie U-Schenkel der Wickelkammern 18 bis 21 und die Innenseite der Hauptstromwicklung 6 liegen an der Rückseite der Pollappen 50 der Polpaare 2, 3 an. Zum Schutz gegen eventuelle Kriechströme zwischen dem Plus-Kontaktschuh 41 und dem Polgehäuse 1 ist der Innenrand 49 am anschlußseitigen Ende 51 des Polgehäuses 1 erweitert. In dem erweiterten Ende 51 kann zusätzlich noch im Bereich des Plus-Kontaktschuhs 41 ein Isolierstreifen 52 angeordnet sein.

Ein zweites Ausführungsbeispiel eines Stators ist in Figur 5 dargestellt. Soweit die Teile gleich denen des ersten Ausführungsbeispieles sind, sind sie mit denselben Bezugszahlen bezeichnet.

Ein Wicklungsträger 53 ist wie der Wicklungsträger 17 aus einem flachen, biegsamen, isolierenden und wärmebeständigen Bandmaterial - beispielsweise Preßspan - hergestellt. Das geschieht wiederum in einem automatisierten Verfahren durch Schneiden, Prägen, Falten des Bandmaterials. Lediglich die Wickelkammern 54 bis 57 und die nicht dargestellten geschlitzten Lappen, welche 27 und 28 des ersten Ausführungsbeisieles entsprechen, werden nach der dem späteren Wölbungsmittelpunkt abgewandten Seite des Wicklungsträgers 53 gefaltet. Nach dem fortlaufenden Wickeln der Nebenschlußwicklung 58 auf den Wicklungsträger 53, nach dem Anschweißen von Anfang 46 und Ende 47 der Nebenschlußwicklung 58 an die gleichen Kontaktteile 41 und 42 wie die des ersten Ausführungsbeisieles und nach dem Verbacken oder Verkleben bzw. Versiegeln der Nebenschlußwicklung 58 am Wicklungsträger 53 wird der Wicklungsträger 53 gewölbt. Bei diesem Ausführungsbeispiel befindet sich die Nebenschlußwicklung 58 an der dem Wölbungsmittelpunkt abgewandten Seite des Wicklungsträgers 53. Der Wicklungsträger 53 samt Nebenschlußwicklung 58 wird wie die Pole 8, 9 von innerhalb des automatisch hergestellten Spulenkorbs der Hauptschlußwicklung 6 in die Fenster 48 der Wicklungselemente 8 und 9 eingesetzt. Die Wicklungselemente 8 und 9 der Hauptschlußwicklung 6 umrahmen dann die Wicklungselmente 13 bis 16 der Nebenschlußwicklung 58. Die Hauptschlußwicklung 6 liegt somit mit ihrer Innenseite außen am Wicklungsträger 53 an. Die aus Haupt- und Nebenschlußwicklung 6 und 58 zusammengesetzte Erregerwicklung 5 wird dann in das Polgehäuse 1 geschoben. Die Pole der Polpaare 2 und 3 werden wiederum durch die zugeordneten Fenster 22 bis 25 des Wicklungsträgers 53 gesteckt und mit den Schrauben 4 an die Innenwand 49 des Polgehäuse 1 geschraubt. Der Wicklungsträger 53 liegt dann mit seinem Außenumfang an den Pollappen 5 der Polpaare 2 und 3. Der freie U-Schenkel der Wickelkammern 59 bis 57 und die Außenseite der Hauptstromwicklung 6 liegen an der Innenwand 49 des Polgehäuses 1 an.

Der Wicklungsträger 53 benötigt weniger Bandmaterial wegen des kleineren Wölbungsdurchmessers als der des Wicklungsträgers 17. Außerdem kann die in dem Spulenkorb der Hauptschlußwicklung 6 aufgenommene Nebenschlußwicklung 58 die Montage der Erregerwicklung 5 im Polgehäuse 1 erleichtern.

## Patentansprüche

1. Stator für eine elektrische Maschine mit einem Polgehäuse, mit Polen und mit einer aus Fenster aufweisenden und die Pole aufnehmenden Wicklungselementen gebildeten Erregerwicklung, welche aus einer Haupt- und einer Nebenschlußwicklung besteht, deren Wicklungselemente untereinander und gegenüber den Polen und dem Polgehäuse isoliert angeordnet sind, dadurch gekennzeichnet, daß die Nebenschlußwicklung (7) auf einem Wicklungsträger (17) aus flachem, biegsamem und isolierendem Bandmaterial aufgebracht ist, welcher den Polen (3,26) angepaßte Fenster (22 bis 25) hat, an deren Fensterkanten Wickelkammern (18 bis 21) angefaltet sind, in denen jeweils eins der die zugehörigen Fenster (22 bis 25) umgebenden Wicklungselemente (13 bis 16) der Nebenschlußwicklung (7) liegt, und an welchem Wicklungsträger (17) Stützpunkte (32 bis 39) für den Wicklungsdraht der Nebenschlußwicklung (7) ausgebildet sind, und auf dem mit den Enden (46, 47) der Nebenschlußwicklung (7) verbindbare Kontaktteile (41,42) für den Spannungsanschluß angeordnet sind, und daß die Wicklungskammern (18 bis 21) samt Wicklungselementen (13 bis 18) der Nebenschlußwicklung (7) in die zugeordneten Fenster der mittels eines automatisierten Verfahrens herstellbaren Hauptschlußwicklung (6) eingesetzt sind, wobei der gewölbte Wicklungsträger (17) an den einzelnen Elementen der Hauptschlußwicklung (6) anliegt.

2. Stator nach Anspruch 1, dadurch gekennzeichnet, daß die Nebenschlußwicklung (7) auf dem Wicklungsträger (17) fixierend verbacken ist.

3. Stator nach Anspruch 1, dadurch gekennzeichnet, daß die Enden (46,47) der Nebenschlußwicklung (7) an auf dem Rand (31) des Wicklungsträgers (17) lagefixierend sitzende Kontaktteile (41, 42) geschweißt sind.

4. Stator nach Anspruch 1, dadurch gekennzeichnet, daß der Wicklungsträger (17) mit mindestens einer Fertigungstoleranzen in Umfangsrichtung des Stators ausgleichenden Falte (45) versehen ist.

5. Stator nach Anspruch 1, dadurch gekennzeichnet, daß der Wicklungsträger (17) samt Nebenschlußwicklung (7) und Kontaktteilen (41, 42) mittels eines automatisierten Verfahrens herstellbar ist.

6. Stator nach Anspruch 1 und 5, dadurch gekennzeichnet, daß der die aus Haupt- und Nebenschlußwicklung (6;7) zusammengesetzte Erregerwicklung (5) aufnehmende Wicklungsträger (17) in das Polgehäuse (1) eingesetzt ist, wobei er an dessen Innenwand (49) anliegt, während die Wickelkammern (18 bis 21) auf den Polen (8, 9) sitzen, an deren Pollappen (50) die Hauptschlußwicklung sich abstützend anliegt.

7. Stator nach Anspruch 1 und 5, dadurch gekennzeichnet, daß der die aus Haupt- und Nebenschlußwicklung (6; 7) gebildete Erregerwicklung (5) aufnehmende Wicklungsträger (17) in das Polgehäuse (1) eingesetzt ist, wobei die Wickelkammern (18 bis 21) auf den Polen (8, 9) sitzen, an deren Pollappen (50) der Wicklungsträger (17) anliegt, während die Hauptschlußwicklung (6) an der Innenwand (49) des Polgehäuses (1) sich abstützend anliegt.

## Claims

1. Stator for an electrical machine with a pole housing, with poles and with an exciter winding which is formed from winding elements having windows and receiving the poles and which consists of a series and a shunt winding, the winding elements of which are arranged insulated with respect to one another and with respect to the poles and the pole housing, characterized in that the shunt winding (7) is applied to a winding holder (17) of flat, flexible and insulating ribbon material, which has windows (22 to 25) matching the poles (3, 26), at the window edges of which winding chambers (18 to 21) are folded on, in which in each case one of the winding elements (13 to 16), surrounding the associated windows (22 to 25), of the shunt winding (7) is located, and at which winding former (17) support points (32 to 39) for the winding wire of the shunt winding (7) are formed, and on which contact parts (41, 42), which can be connected to the ends (46, 47) of the shunt winding (7), for the voltage connection are arranged, and in that the winding chambers (18 to 21) and winding elements (13 to 18) of the shunt winding (7) are inserted into the associated windows of the series winding (6), which can be produced by means of an automated process, the arched winding former (17) resting against the individual elements of the series winding (6).

2. Stator according to Claim 1, characterized in that the shunt winding (7) is baked in an attaching manner on the winding former (17).

3. Stator according to Claim 1, characterized in that the ends (46, 47) of the shunt winding (7) are welded on contact parts (41, 42) located in a position fixing manner on the edge (31) of the winding former (17).

4. Stator according to Claim 1, characterized in that the winding former (17) is provided with at least one fold (45) which compensates for production tolerances in the circumferential direction of the stator.

5. Stator according to Claim 1, characterized in that the winding former (17) plus shunt winding (7) and contact parts (41, 42) can be produced by means of an automated process.

6. Stator according to Claim 1 and 5, characterized in that the winding former (17) accommodating the exciter winding (5), assembled from series and shunt winding (6; 7) is inserted into the pole housing (1) resting against its inside wall (49) whereas the winding chambers (18 to 21) are located on the poles (8, 9) against the pole tabs (50) of which the series winding rests so as to support itself.

7. Stator according to Claim 1 and 5, characterized in that the winding former (17) accommodating the exciter winding (5) formed from series and shunt winding (6; 7) is inserted into the pole housing (1), the winding chambers (18 to 21) being located on the poles (8, 9) against the pole tabs (50) of which the winding former (17) rests whereas the series winding (6) rests against the inside wall (49) of the pole housing (1) so as to support itself.

## Revendications

1. Stator pour une machine électrique avec un carter polaire, avec des pôles et avec un enroulement d'excitation formé d'éléments d'enroulements comportant des fenêtres et contenant les pôles, et constitué par un enroulement principal et un enroulement secondaire branchés en série, dont les éléments d'enroulements sont disposés de façon isolée les uns vis-à-vis des autres et vis-à-vis des pôles et du carter polaire, caractérisé en ce que l'enroulement secondaire branché en série (7) est placé sur un support d'enroulement (17) réalisé à partir d'une bande plane et flexible de matériau isolant et comportant des fenêtres (22 à 25) adaptées aux pôles (3, 26) dans lesquelles se trouve à chaque fois un des éléments d'enroulements (13 à 16) de l'enroulement secondaire branché en série (7) entourant les fenêtres correspondantes (22 à 25), ce support d'enroulement (17) comportant des points d'appui (32 à 39) pour le fil métallique de l'enroulement secondaire branché en série 8 et des éléments de contact (41, 42) branchables sur les extrémités (46, 47) de l'enroulement secondaire branché en série (7) pour le raccordement à la tension d'alimentation, et en ce que les chambres d'enroulements (18 à 21) y compris les éléments d'enroulements (13 à 18) de l'enroulement secondaire branché en série (7), sont placés dans les fenêtres appropriées de l'enroulement principal branché en série (6) au moyen d'un procédé automatisé, avec le support d'enroulement (17) cintré au voisinage des enroulements élémentaires de l'enroulement principal branché en série (6).

2. Station conforme à la revendication 1, caractérisé en ce que enroulement secondaire branché en série (7) est fixé par cuisson sur le support d'enroulement (17).

3. Stator selon la revendication 1, caractérisé en ce que les extrémités (46, 47) de l'enroulement secondaire monté en série (7) sont soudées sur les parties de contacts (41, 42) situées fixement sur le bord (31) du support d'enroulement (17).

4. Stator selon la revendication 1, caractérisé en ce que le support d'enroulement (7) est pourvu d'un pli (45) compensant au moins une tolérance de fabrication dans le sens périphérique du stator.

5. Stator selon la revendication 1, caractérisé en ce que le support d'enroulement y compris l'enroulement secondaire monté en série (7) et les parties de contact (41, 42) est susceptible d'être exécuté au moyen d'un procédé automatique.

6. Stator selon la revendication 1 et 5, caractérisé en ce que l'enroulement excitateur recevant le support d'enroulement (17), assemblé à l'enroulement principal et secondaire (6, 7) est mis en place dans le carter polaire se trouvant dans la paroi intérieure (49) et les chambres d'enroulements (18 à 21) se situent sur les pôles (8, 9), sur les pattes polaires desquelles prend appui l'enroulement principal.

7. Stator selon la revendication 1 et 5, caractérisé en ce que l'enroulement excitateur (5) recevant le support d'enroulement (17), formé de l'enroulement principal et secondaire (6, 7) est placé dans le carter polaire (1) où les chambres d'enroulement (18 à 21) se situent sur les pôles (8, 9) sur les pattes polaires desquelles repose le support d'enroulement (17), et l'enroulement principal (6) prend appui sur la paroi intérieure (49) du carter polaire (1).

FIG.1

FIG.2

# FIG.3

EP 0 306 486 B1

FIG.4

FIG.5